# EUROPEAN PATENT APPLICATION

(11) **EP 3 925 774 A1**
(43) Date of publication of application: **22.12.2021**
(21) Application number: 20180472.1
(22) Date of filing: 17.06.2020
(51) Int. Cl.: B32B 17/10, B60Q 3/208, C03C 27/12

(54) **FUNCTIONAL LIGHTING IN AN OBSCURATION BAND OF A VEHICLE GLAZING**

(71) Applicant: Inalfa Roof Systems Group B.V., 5807 GW Oostrum (NL)
(72) Inventor: van Doleweerd, Theodorus, 6024 AK Budel-Dorplein (NL)
(74) Representative: De Vries & Metman

(57) **Abstract**

A layered window panel comprises a first layer of transparent material and a second layer of transparent material. The window panel is provided with an obscuration area, which obscuration area is opaque. The window panel further comprises a lighting device configured for functional lighting. The lighting device is arranged between the first layer and the second layer in the obscuration area.

## Description

The invention relates to a layered window panel comprising a functional lighting device and to a method for providing such a layered window panel.

Open roof assemblies are well known in the art. The known open roof assemblies are arranged on a roof of a vehicle, wherein an opening is provided in the roof. A moveable closure member is selectively in an open position or in a closed position. In the open position, an interior of the vehicle is in open contact with an exterior of the vehicle, e.g. for providing fresh air in the interior. In the closed position, the interior of the vehicle is closed and protected against rain and other external influences, for example. In the known open roof assembly, the closure member may be (semi-)transparent to allow sunlight to enter the interior, when the closure member is in the closed position.

Providing such an open roof assembly or a fixed transparent panel in a vehicle roof limits available inner roof surface area for providing functional elements like an overhead lighting device, e.g. a reading light.

In prior art, a LED has been incorporated in a layered glass window panel, wherein the LED is arranged between two layers of glass. Further, from prior art, it is known to provide multiple LED's suitably arranged to provide a functional light in a roof glass panel.

While such an integration of a light source in a roof glass panel may be functional for reading or providing illumination for entering or leaving the vehicle, such integrated LED's are visible albeit that the LED's are small. In particular in a moving vehicle, small dots in or on a window may be annoying and disturbing during driving and are, in any case, aesthetically not desired.

It is an object of the present invention to provide a window panel comprising a functional lighting device, wherein the lighting device does not obstruct a view through the window panel.

In a first aspect, the object is achieved in a layered window panel according to claim 1. The layered window panel according to the present invention comprises a first layer of transparent material and a second layer of transparent material, wherein the window panel is provided with an opaque obscuration area. The window panel further comprises a lighting device configured for functional lighting and the lighting device is arranged between the first layer and the second layer in the obscuration area.

Many window panels and in particular vehicular window panels have an opaque obscuration area, usually at least an obscuration band in their peripheral area. The obscuration area may, for example, be provided for mounting the window panel without affecting a visual appearance at a side of the window panel opposing the side at which the window panel is adhered. Still, usually, the obscuration area exceeds the area for adherence and, as a result, a part of such an obscuration area may also be visible from a passenger compartment of the vehicle. According to the present invention, a functional lighting device is arranged in between layers of the layered window panel in the obscuration area. As the obscuration area is already essentially opaque, the lighting device cannot obstruct any view through a transparent area of the window panel. Moreover, the obscuration area may be designed for visually hiding elements like the functional lighting device.

As used herein, transparent means that a noticeable amount of visible light is able to pass through. For example, usually, roof window panels are darkened and thus have a reduced transmissibility for visible light. Still, the outside surroundings, in particular light variations in the outside surroundings, are distinguishable and therefore a noticeable amount of light is considered to be able to pass through the roof window panel. Similarly, opaque is used herein as indicating that no noticeable amount of light is able to pass through, in particular in contrast to any transparent area adjacent an opaque area. So, a minor, measurable, but in practice not noticeable amount of light may be able to pass through the opaque area.

In an embodiment, at least one of the first layer and the second layer is a sheet of glass. It is common that at least one of the layers of transparent material is formed of glass. Still, one or both layers of transparent material may be formed from another material, e.g. a plastic material.

In an embodiment of the layered window panel, the lighting device comprises a substrate and a plurality of light sources arranged on the substrate. As the light sources, in particular LED's, arranged between layers of a layered window panel, need to be small, light output per light source is usually relatively low. So, in particular for functional lighting, multiple light sources like LED's may be provided on a substrate and the substrate with light sources is arranged between the layers. The light sources may be switchable as a group, but may also be addressable individually or predetermined subgroups. The substrate may be any kind of suitable substrate. Still, in view of the position in the obscuration area, there is no need to provide a transparent substrate with transparent or very thin conductive leads, reducing costs and improving manufacturability and reliability as commonly available materials and techniques may be suitable for providing such substrate with light sources.

In an embodiment, the first layer of transparent material provides a first outer surface and a first inner surface opposite to the first outer surface and the second layer of transparent material provides a second inner surface and a second outer surface opposite to the first inner surface. Further, the second inner surface opposes the first inner surface and the lighting device is arranged between the first and the second inner surface. Thus, a layered window panel is provided with at least four surfaces at which elements like a lighting device may be arranged. In a particular embodiment thereof, an obscuration layer is arranged on at least one of the inner surfaces and outer surfaces in the obscuration area and wherein an obscuration opening is provided in the obscuration layer. The light sources of the lighting device are arranged adjacent the obscuration opening to enable light to pass through the obscuration layer. In this embodiment, the lighting device is arranged behind the obscuration layer and the obscuration opening is provided to enable light output by the lighting device to pass.

In a further embodiment thereof, the obscuration layer is provided on one of the outer surfaces. The obscuration layer at the outer surface is provided with the obscuration opening at the location of the light source of the lighting device arranged at the inner surface.

In yet a further embodiment thereof, a first obscuration layer is provided on the second outer surface and a second obscuration layer is provided on the first inner surface, the obscuration opening being provided in the first obscuration layer. The second obscuration layer may function as an obscuring background layer for the lighting device.

In an embodiment, the lighting device comprises a camouflage layer, wherein the camouflage layer is configured to reduce visibility of the lighting device. In particular, the camouflage layer is intended to provide the lighting device, in as far visible through the obscuration opening, with a desired look. For example, the substrate of the lighting device may be provided with a colour corresponding to a colour of the obscuration layer to further reduce visibility of the lighting device.

In an embodiment, a surface area of the camouflage layer exceeds a surface area of the obscuration opening and the camouflage layer is arranged at a side of the lighting device opposing the obscuration opening. Thus, the camouflage layer is arranged between the obscuration opening and the lighting device. With the surface area of the camouflage layer exceeding the surface area of the obscuration opening, the lighting device with the camouflage layer may be easily positioned during manufacturing with a significant tolerance margin, while the camouflage layer and the obscuration layer overlap to reduce visibility of the lighting device.

In a further aspect, the present invention provides a roof assembly for a vehicle roof, wherein the roof assembly comprises the above-described layered window panel.

In an aspect, the present invention further provides a method according to claim 13 for providing a layered window panel. The method comprises the steps of providing a first layer of transparent material and a second layer of transparent material; providing an opaque obscuration area on at least one of the first and the second layer of transparent area; providing a lighting device configured for functional lighting; arranging the lighting device between the first layer and the second layer of transparent material in the obscuration area; and bonding the first layer, the lighting device and the second layer in the arrangement as provided in the previous step.

In an embodiment, the method step of providing an opaque obscuration area comprises providing an obscuration opening and, in the step of arranging the lighting device between the first layer and the second layer, the light sources of the lighting device are being arranged adjacent the obscuration opening to enable light to pass through the obscuration layer.

In an embodiment of the above method, the step of arranging the lighting device between the first layer and the second layer comprises providing the lighting device with a camouflage layer, wherein the camouflage layer is configured to reduce visibility of the lighting device.

Further scope of applicability of the present invention will become apparent from the detailed description given hereinafter. However, it should be understood that the detailed description and specific examples, while indicating embodiments of the invention, are given by way of illustration only, since various changes and modifications within the scope of the invention will become apparent to those skilled in the art from this detailed description with reference to the appended schematical drawings, in which:
- Fig. 1A: shows a perspective view of a vehicle roof with an open roof assembly;
- Fig. 1B: shows an exploded view of the open roof assembly of Fig. 1A;
- Fig. 2A: shows a frontal view of an embodiment of a window panel for use in a vehicle roof assembly;
- Fig. 2B: shows a perspective view of a passenger compartment of a vehicle with a window panel according to the present invention;
- Fig. 3A: shows a cross-section of a first embodiment of a window panel according to the present invention;
- Fig. 3B: shows a cross-section of a second embodiment of a window panel according to the present invention;
- Fig. 3C: shows a cross-section of a third embodiment of a window panel according to the present invention;
- Fig. 4A: shows a frontal view of a first embodiment of a lighting device for use in a window panel according to the present invention;
- Fig. 4B: shows a cross-section of the first embodiment of a lighting device according to Fig. 4A;
- Fig. 4C: shows a cross-section of a second embodiment of a lighting device for use in a window panel according to the present invention;
- Fig. 5A: shows a frontal view of a third embodiment of a lighting device for use in a window panel according to the present invention;
- Fig. 5B: shows a cross-section of the third embodiment of a lighting device according to Fig. 5A; and
- Fig. 6: shows a frontal view of a further embodiment of a window panel for use in a vehicle roof assembly.

The present invention will now be described with reference to the accompanying drawings, wherein the same reference numerals have been used to identify the same or similar elements throughout the several views.

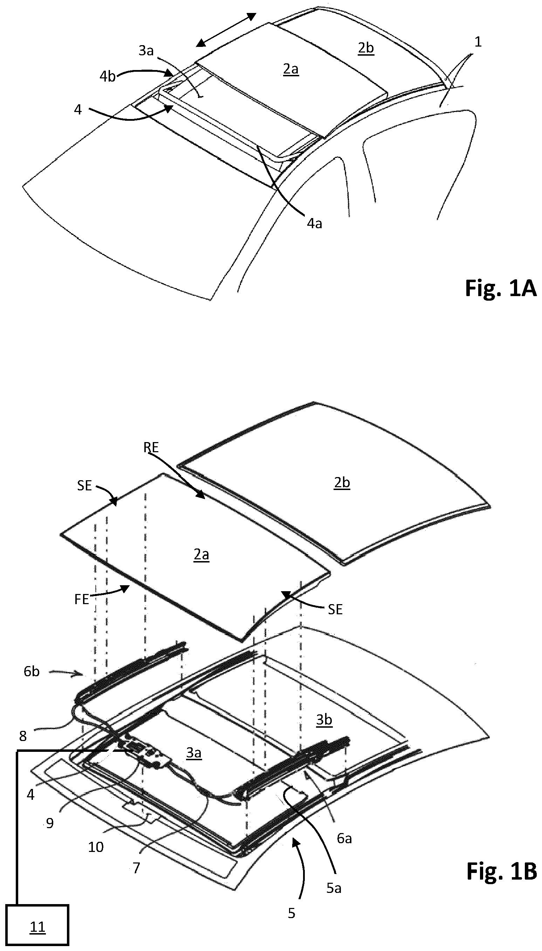

Fig. 1A illustrates a vehicle roof 1 having an open roof assembly arranged therein. The open roof assembly comprises a moveable panel 2a and a fixed panel 2b. The moveable panel 2a is also referred to as a closure member, since the moveable panel 2a is moveable over a first roof opening 3a such to enable to open and to close the first roof opening 3a. A wind deflector 4 is arranged at a front side of the first roof opening 3a.

In the illustrated embodiment, the moveable panel 2a may be in a closed position, which is a position wherein the moveable panel 2a is arranged over and closes the first roof opening 3a and thus usually is arranged in a plane of the vehicle roof 1. Further, the moveable panel 2a may be in a tilted position, which is a position wherein a rear end RE of the moveable panel 2a is raised as compared to the closed position, while a front end FE of the moveable panel 2a is still in the closed position. Further, the moveable panel 2a may be in an open position, which is a position wherein the moveable panel 2a is slid open and the first roof opening 3a is partly or completely exposed.

It is noted that the illustrated vehicle roof 1 corresponds to a passenger car. The present invention is however not limited to passenger cars. Any other kind of vehicles that may be provided with a moveable panel are contemplated as well.

Fig. 1B illustrates the same vehicle roof as shown in Fig. 1A having panels 2a and 2b. In particular, while Fig. 1A shows the open roof assembly in the open position, Fig. 1B is an exploded view of the open roof assembly in a closed position. Further, in this exploded view of Fig. 1B, it is shown that there is a second roof opening 3b. The first and second roof openings 3a, 3b are provided in a frame 5 of the open roof assembly. An edge 5a of the frame 5 defines the first roof opening 3a.

The second roof opening 3b is arranged under the fixed panel 2b such that light may enter a vehicle interior passenger compartment through the fixed panel 2b, presuming that the fixed panel 2b is a glass panel or a similarly transparent panel, for example made of a plastic material or any other suitable material. The second roof opening 3b with a transparent or translucent fixed panel 2b is optional and may be omitted in another embodiment of the open roof assembly.

The wind deflector 4 is commonly a flexible material, e.g. a woven or non-woven cloth having through holes arranged therein or a web or net. The flexible material is supported by a support structure 4a, e.g. a bar-like or tube-like structure, which structure is hingedly coupled, directly or indirectly, to the frame 5 at a hinge 4b.

The wind deflector 4 is arranged in front of the first roof opening 3a and adapts air flow when the moveable panel 2a is in the open position. In its raised position, the wind deflector 4 reduces inconvenient noise due to air flow during driving. When the moveable panel 2a is in the closed position or in the tilted position, the wind deflector 4 is held down below the front end FE of the moveable panel 2a.

Usually, the wind deflector 4 is raised by a spring force when the moveable panel 2a slides to an open position and the wind deflector 4 is pushed down by the moveable panel 2a when the moveable panel 2a slides back into its closed position. In Fig. 1A, the moveable panel 2a is shown in an open position and the wind deflector 4 is shown in a raised position. In Fig. 1B, the moveable panel 2a is shown in a closed position and the wind deflector 4 is correspondingly shown in a position in which it is held down.

Fig. 1B further illustrates a drive assembly having a first guide assembly 6a, a second guide assembly 6b, a first drive cable 7 and a second drive cable 8. The first and second guide assemblies 6a, 6b are arranged on respective side ends SE of the moveable panel 2a and may each comprise a guide and a mechanism. The guide is coupled to the frame 5, while the mechanism comprises moveable parts and is slideably moveable in the guide. The first and the second drive cables 7, 8 are provided between the mechanisms of the respective guide assemblies 6a, 6b and a electric motor 9.

The drive cables 7, 8 couple the electric motor 9 to the mechanisms of the respective guide assemblies 6a, 6b such that upon operating the electric motor 9, the mechanisms start to move. In particular, a core of the drive cable 7, 8 is moved by the electric motor 9 such to push or pull on the mechanisms of the respective guides 6a, 6b. Such a drive assembly is well known in the art and is therefore not further elucidated herein. Still, any other suitable drive assembly may be employed as well without departing from the scope of the present invention. Moreover, in a particular embodiment, an electric motor may be operatively arranged between the respective guides and the respective mechanisms of the guide assemblies 6a, 6b and, in such embodiment, a drive assembly may be omitted completely.

In the illustrated embodiment, the guide assemblies 6a, 6b may start movement with raising the rear end RE of the moveable panel 2a, thereby bringing the moveable panel 2a in the tilted position. Then, from the tilted position, the guide assemblies 6a, 6b may start to slide to bring the moveable panel 2a in the open position. The present invention is however not limited to such embodiment. For example, in another embodiment, the moveable panel 2a may be moveable to a tilted position by raising the rear end RE, while an open position is reached by first lowering the rear end RE and then sliding the moveable panel 2a under the fixed panel 2b or any other structure or element provided behind the rear end RE of the moveable panel 2a. In further exemplary embodiments, the moveable panel 2a may be merely moveable between a closed position and a tilted position or between a closed position and an open position.

In the illustrated embodiment, the electric motor 9 is mounted near or below the front end FE of the moveable panel 2a at a recess 10. In another embodiment, the electric motor 9 may be positioned at any other suitable position or location. For example, the electric motor 9 may be arranged near or below the rear end RE of the moveable panel 2a or below the fixed panel 2b.

A control unit 11 is schematically illustrated and is operatively coupled to the electric motor 9. The control unit 11 may be any kind of processing unit, either a software controlled processing unit or a dedicated processing unit, like an ASIC, which are both well known to those skilled in the art. The control unit 11 may be a stand-alone control unit or it may be operatively connected to another control unit, like a multipurpose, generic vehicle control unit. In yet another embodiment, the control unit 11 may be embedded in or be part of such a generic vehicle control unit. Essentially, the control unit 11 may be embodied by any control unit suitable for, capable of and configured for performing operation of the electric motor 9 and thus the moveable roof assembly.

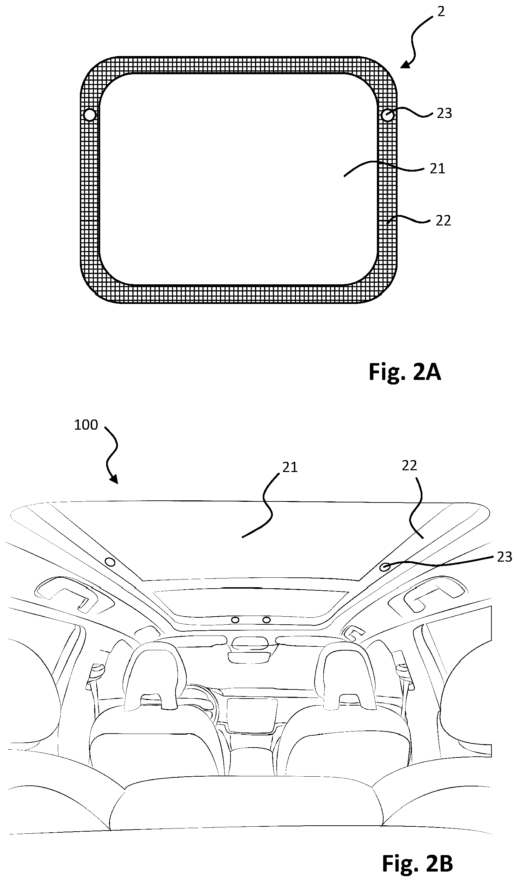

Fig. 2A shows a view of a layered window panel 2 having a transparent area 21 and an obscuration area 22 and in particular a window panel configured for use in a vehicle roof assembly, for example as a closure member 2a or as a fixed panel 2b in an open roof assembly as shown in Figs. 1A and 1B. In the embodiment of Fig. 2A a functional lighting element 23 is provided in the layered window panel 2 in the obscuration area 22. As a result, a view through the transparent area 21 is not obstructed by the functional lighting element 23 in any way.

Fig. 2B shows a perspective view of a passenger compartment 100 of a vehicle. The vehicle is provided with a window panel 2 according to Fig. 2A, comprising a transparent area 21, an obscuration area 22 circumventing the transparent area 21 and a functional lighting element 23 arranged in the obscuration area 22. The illustrated functional lighting element 23 may be used a general compartment lighting, e.g. for getting into or out of the vehicle, or may be used as a reading light for a passenger or any other functional lighting purpose. The functional lighting element 23 may be switched on and off by the opening and the closing of the door, by a switch arranged in the passenger compartment or by a switch arranged in the window panel 2, e.g. by providing capacitive touch functionality, or the like. The skilled person is enabled to select any suitable method and means for operating the functional lighting element 23 and it is noted that the present invention is not in any way limited to such method and means of operating the functional lighting element 23.

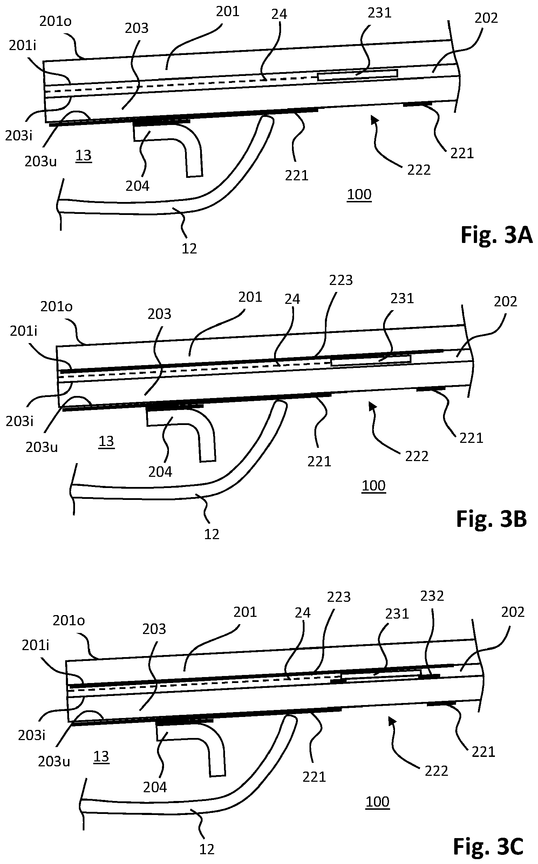

Fig. 3A shows a first embodiment of the integrated functional lighting element 23 in more detail in cross-section. A first structural layer 201 of transparent material, having an outer surface 201o and an inner surface 201i, is adhered to a second structural layer 203 of transparent material, having an outer surface 203o and an inner surface 203i, through a transparent adhesive layer 202. Such a layered window panel is well known. For example, the first and the second layers 201, 203 may be glass and the adhesive layer 202 may be PVB or EVA. However, the present invention is not limited to such particular selection of materials. Other suitable structural, i.e. having a rigidity sufficiently high for the intended application, and transparent materials like certain plastic materials may be used as well.

Between the first and second layers 201, 203 a lighting device 231 is provided. At least one electrically conductive lead 24 is provided for supplying electrical energy and, optionally, one or more control signals to the lighting device 231. The electrically conductive lead 24 may be a conductive wire, a conductive track on a substrate or a conductive layer on the inner surface 201i, 203i of the first or second layer 201, 203, respectively, for example.

An obscuration layer 221 is provided to form the obscuration area and an obscuration opening 222 is provided to enable light originating from the lighting device 231 to pass through the obscuration layer 221. The obscuration layer 221 may be any suitable material, for example a ceramic material. A skilled person is enabled to select a suitable material for the obscuration layer 221.

A mounting bracket 204 is provided in the obscuration area 22 on the obscuration layer 221. A cover element 12, commonly also referred to as a headliner, is provided to cover the mounting bracket 12 and any other mounting elements and the like present in a covered space 13. For example, a mechanism for tilting, sliding or otherwise moving the window panel may be arranged in the covered space 13. Further, a vehicle body part supporting the window panel 2 may be covered by the cover element 12.

It is noted that the arrangement of the lighting device 231 in the obscuration area enables to use simple and cost-effective materials and methods to provide for the integrated functional lighting, since no transparent materials like a transparent substrate are needed. Similarly, in this embodiment, the electrically conductive lead 24 does not need to be transparent as the obscuration layer 221 extends to a peripheral edge of the second layer 203 hiding the lead 24 from view.

Fig. 3B illustrates a second embodiment. Compared to the first embodiment of Fig. 3A, a second obscuration layer 223 is added next to the first obscuration layer 221. The lighting device 231 is arranged between the second obscuration layer 223 and the obscuration opening 222 in the first obscuration layer 221. The second obscuration layer 223 assists the first obscuration layer 221 in providing an opaque obscuration area 22 and in removing the lighting device 231 from sight, at least from an outside of the vehicle.

The embodiment of the lighting device 231 illustrated in Fig. 3C further comprises a camouflage layer 232. In the illustrated particular embodiment, the camouflage layer 232 is provided at a periphery of the lighting device 231. The camouflage layer 232 preferably has an appearance, e.g. colour, similar to the first obscuration layer 221 such that an alignment between the lighting device 231 and the obscuration opening 222 is provided with a tolerance range. Upon manufacturing of the layered window panel 2, the alignment of the lighting device 231 and the obscuration opening 222 is eased, reducing costs and complexity, without affecting the appearance.

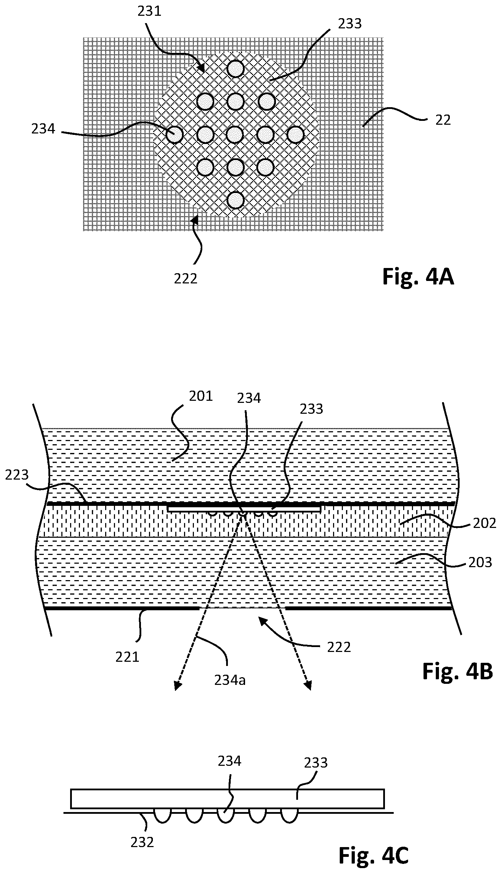

Fig. 4A shows a more detailed frontal view of a lighting device 231 integrated in a layered window panel. The obscuration area 22 is provided with an obscuration opening 222. The lighting device 231 comprises a plurality of light sources 234 on a substrate 233. The lighting device 231 opposes the obscuration opening 222. Further, the substrate 233 has a surface area that exceeds a surface area of the obscuration opening 222 such that the substrate 233 covers the whole obscuration opening 222 despite any possible inaccuracy in alignment relative to the obscuration opening 222 to provide a uniform appearance.

Fig. 4B shows a cross-section of the embodiment of Fig. 4A. As shown in Fig. 4B, the lighting device 231 is arranged in the adhesive layer 202 between the first and second structural layers 201, 203 of transparent material. The first obscuration layer 221 is provided on the outer surface of the second layer 203 and the second obscuration layer 223 is provided on the inner surface of the first layer 201. The substrate 233 of the lighting device 231 is arranged on the second obscuration layer 223. The light sources 234 oppose an obscuration opening 222 in the first obscuration layer 221. A light bundle 234a from the light sources 234 passes through the second layer 203 and the obscuration opening 222 to provide functional lighting.

Fig. 4C shows an embodiment of the lighting device 231 for use in the embodiment of Figs. 4A and 4B. Whereas in Figs. 4A and 4B, the substrate 233 might be visible through the obscuration opening 222, the lighting device 231 of Fig. 4C is provided with a camouflage layer 232 having an opening for each light source 234. The camouflage layer 232 covers the substrate 233 and its surface area exceeds the surface area of the obscuration opening 222 similar to the substrate 233 in the above described embodiment. The camouflage layer 232 may be a film or foil, e.g. made of plastics, or may be a coating or paint on the substrate 233. Preferably the camouflage layer 232 may be selected to have an appearance similar to the appearance of the obscuration area to visually hide the lighting device 231. Still, if so desired, the camouflage layer 232 may be provided with a contrasting appearance to emphasize the presence of the lighting device 231. Also in such an embodiment, the lighting device 231 does not affect the view through the transparent area of the window panel.

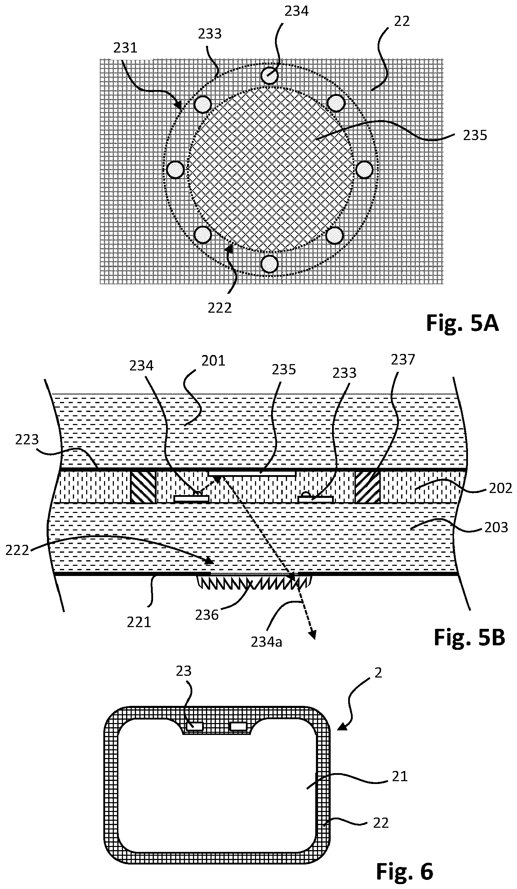

Figs. 5A and 5B illustrate a further embodiment, wherein the lighting device 231 comprises a ring-shaped substrate 233 supporting a plurality of light sources 234, e.g. LED's. The substrate 233 is arranged on the inner surface of the second layer 203 and the light sources 234 emit light towards the first layer 201. A reflective area 235 is provided on the inner surface of the first layer 201 such that the emitted light is reflected towards the obscuration opening 222 arranged on the outer surface of the second layer 203. Thus, the substrate 233 may be arranged out of sight behind the first obscuration layer 221.

The reflective area 235 may be provided by providing a reflective second obscuration layer 223 or by providing a reflective element. Optionally, the reflective area 235 may be provided with light beam shaping properties for providing a parallel, a divergent or a convergent light bundle, for example. For example, the reflective area may be specularly reflective or diffusely reflective. Further, the reflective area 235 may have a shaped surface, e.g. convexly shaped or concavely shaped. Of course, such properties may be suitably combined to achieve a desired beam shape.

Optionally, further beam shaping elements may be provided. For example, a Fresnel lens 236 may be provided on the second layer 203 at the obscuration opening 222. If deemed appropriate, multiple beam shaping elements may be provided to obtain a desired light bundle. In the present embodiment, the reflective area 235 may be provided with suitable properties and a beam shaping element, like the Fresnel lens 236, may be provided at the obscuration opening 222.

Further, optionally, light blocking means 237 may be provided at a periphery of the lighting device 231 to prevent light leakage into one or more of the layers 201, 202, 203 of the layered window panel. As such a layer 201, 202, 203 may function as a light guide, light leakage could lead to undesired light leaking from a peripheral edge of the obscuration area 22. The light blocking means 237 may be formed as a housing of the lighting device 231 such that all elements related to the functioning of the lighting device 231 may be manufactured as a single unit and may then be arranged between the first and second layers 201, 203 as a whole unit. Such a unit may also comprise a camouflage layer as described hereinabove to reduce positioning accuracy requirements during manufacturing of the layered window panel.

Fig. 6 illustrates an embodiment of a layered window panel 2 for use as a roof window panel. In this embodiment, the obscuration area 22 is shaped to integrate the functional lighting element 23 such that the functional lighting element 23 is not arranged in the transparent area 21. Although it may be desired to provide the transparent area 21 as large as possible, in practice, it may be preferred to have the functional lighting element 23 in the obscuration area 22. Thereto, a shape of the obscuration area 22 may be adapted to cover the functional lighting element 23.

Without departing from the scope of the present invention, the functional lighting element 23 may of course be provided with further functions, e.g. be dimmable to provide mood lighting. Further, the obscuration opening may as well be used to incorporate other functional elements like a sensor or a camera. Moreover, such functional elements may be provided in combination with the functional lighting element or be provided without the functional lighting element.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in expectedly any appropriately detailed structure. In particular, features presented and described in separate dependent claims may be applied in combination and any advantageous combination of such claims are herewith disclosed.

Further, it is contemplated that structural elements may be generated by application of three-dimensional (3D) printing techniques. Therefore, any reference to a structural element is intended to encompass any computer executable instructions that instruct a computer to generate such a structural element by three-dimensional printing techniques or similar computer controlled manufacturing techniques. Furthermore, any such reference to a structural element is also intended to encompass a computer readable medium carrying such computer executable instructions.

Further, the terms and phrases used herein are not intended to be limiting, but rather to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly.

The invention being thus described it is apparent that the same may be varied in many ways. Such variations are not to be regarded as a departure from the spirit and scope of the invention, and all such modifications as would be apparent to one skilled in the art are intended to be included within the scope of the following claims.

## Claims

1. A layered window panel comprising a first layer of transparent material and a second layer of transparent material,
wherein the window panel is provided with an obscuration area, the obscuration area being opaque, and
wherein the window panel further comprises a lighting device configured for functional lighting, the lighting device being arranged between the first layer and the second layer in the obscuration area.

2. The layered window panel according to claim 1, wherein at least one of the first layer and the second layer is a sheet of glass.

3. The layered window panel according to claim 1, wherein the lighting device comprises a substrate and a plurality of light sources arranged on the substrate.

4. The layered window panel according to claim 3, wherein at least one of the light sources is an LED.

5. The layered window panel according to claim 1, wherein
• the first layer provides a first outer surface and a first inner surface opposite to the first outer surface;
• the second layer provides a second inner surface and a second outer surface opposite to the first inner surface;
• the second inner surface opposes the first inner surface; and
• the lighting device is arranged between the first and the second inner surface.

6. The layered window panel according to claim 5, wherein an obscuration layer is arranged on at least one of the inner surfaces and outer surfaces in the obscuration area and wherein an obscuration opening is provided in the obscuration layer, the light sources of the lighting device being arranged adjacent the obscuration opening to enable light to pass through the obscuration layer.

7. The layered window panel according to claim 6, wherein the obscuration layer is provided on one of the outer surfaces.

8. The layered window panel according to claim 7, wherein a first obscuration layer is provided on the second outer surface and wherein a second obscuration layer is provided on the first inner surface, the obscuration opening being provided in the first obscuration layer.

9. The layered window panel according to claim 6, wherein the lighting device comprises a camouflage layer, wherein the camouflage layer is configured to reduce visibility of the lighting device.

10. The layered window panel according to claim 9, wherein a surface area of the camouflage layer exceeds a surface area of the obscuration opening and wherein the camouflage layer is arranged at a side of the lighting device opposing the obscuration opening.

11. The layered window panel according to claim 6, wherein the substrate of the lighting device is provided with a colour corresponding to a colour of the obscuration layer.

12. A roof assembly for a vehicle roof, the roof assembly comprising the layered window panel according to claim 1.

13. A method of providing a layered window panel, the method comprising the steps of:
a. providing a first layer of transparent material and a second layer of transparent material;
b. providing an opaque area on at least one of the first and the second layer of transparent area;
c. providing a lighting device configured for functional lighting;
d. arranging the lighting device between the first layer and the second layer of transparent material in the obscuration area; and
e. bonding the first layer, the lighting device and the second layer in the arrangement of step d.

14. The method according to claim 13, wherein step b comprises providing an obscuration opening in the obscuration layer and wherein in step d the light sources of the lighting device are being arranged adjacent the obscuration opening to enable light to pass through the obscuration layer.

15. The method according to claim 13, wherein step d comprises providing the lighting device with a camouflage layer, wherein the camouflage layer is configured to reduce visibility of the lighting device.
